Europäisches Patentamt

European Patent Office

Office européen des brevets

(11) Veröffentlichungsnummer: **0 156 208 B1**

## (12) EUROPÄISCHE PATENTSCHRIFT

(45) Veröffentlichungstag der Patentschrift: **17.02.93**

(21) Anmeldenummer: **85102498.4**

(22) Anmeldetag: **06.03.85**

(51) Int. Cl.⁵: **C09D 5/02**, B05D 7/26, B05D 3/02

(54) **Wässrige Dispersionen zur Herstellung von vernetzbaren Beschichtungen.**

(30) Priorität: **21.03.84 DE 3410234**

(43) Veröffentlichungstag der Anmeldung:
**02.10.85 Patentblatt 85/40**

(45) Bekanntmachung des Hinweises auf die
Patenterteilung:
**17.02.93 Patentblatt 93/07**

(84) Benannte Vertragsstaaten:
**AT BE DE FR GB IT NL SE**

(56) Entgegenhaltungen:
**EP-A- 0 002 548      DE-A- 2 416 446
DE-A- 2 514 741      DE-A- 2 658 843
FR-A- 2 228 096      FR-A- 2 322 910
FR-A- 2 344 607**

(73) Patentinhaber: **HOECHST AKTIENGESELL-
SCHAFT
Postfach 80 03 20
W-6230 Frankfurt am Main 80(DE)**

(72) Erfinder: **Engel, Dieter, Dr.
Rüsselsheimer Strasse 33
W-6092 Kelsterbach(DE)**
Erfinder: **Mondt, Josef, Dr.
Altkönigstrasse 24d
W-6240 Königstein/Taunus(DE)**
Erfinder: **Zimmerschied, Klaus, Dr.
Fasanenweg 19
W-6200 Wiesbaden(DE)**

**Beschreibung**

Die Erfindung betrifft wäßrige Dispersionen auf Basis von vernetzbaren Dispersionscopolymerisaten aus olefinisch ungesättigten Monomeren für die Herstellung von vernetzbaren Beschichtungen auf Oberflächen, ihre Herstellung und ihre Verwendung, insbesondere für Einbrennbeschichtungen und Lacke.

Steigende Rohstoffpreise, restriktive Umweltschutzauflagen und auch Sicherheitstechnische Erfordernisse führten in den vergangenen Jahren zu zahlreichen Entwicklungen auf dem Einbrennlackiersektor mit dem gemeinsamen Ziel, Systeme zu finden, die nicht nur wirtschaftlich, sondern auch umweltfreundlich sind.

Folgende Anforderungen sind dabei an das Lackmaterial zu stellen:

1) Keine oder nur geringe Gehalte an organischen Lösungsmitteln und schädlich wirkenden Stoffen im Verarbeitungszustand.

2) Keine oder nur geringfügige Freisetzung von Spaltprodukten beim Einbrennen der Lacksysteme.

3) Verwendung von weitgehend nichttoxischen Rohstoffen in den Lackformulierungen.

4) Problemlose Reinigung und Entsorgung der Lackierbetriebe.

5) Problemlose Abwasseraufbereitung.

6) Kostensparende Herstellung und Verarbeitung.

7) Keine oder nur geringfügige Änderungserfordernisse an den technischen Einrichtungen bestehender Lackieranlagen.

Unter Zugrundelegung dieser Anforderungen formierten sich im wesentlichen drei Entwicklungsrichtungen neuer Lackiersysteme. Der Leitgedanke der ersten Richtung besteht in einer Weiterentwicklung der konventionellen Lacke zu festkörperreichen und damit lösungsmittelarmen "high-solids-Lackiersystemen". Aber auch bei diesen wird während des Applikations-, des Ablüft- und des Einbrennvorganges noch Lösungsmittel abgegeben, das beispielsweise in Nachverbrennungsanlagen beseitigt werden muß. Die Verminderung des Lösungsmittelgehalts in den high-solids-Systemen gelingt natürlich nur durch Einsatz spezieller Bindemittel. Diese müssen in höher konzentrierten Lösungen deutlich geringere Viskositäten als die üblichen Lackharze haben. Die Filmbildung kann aber nur erfolgen, wenn beim Einbrennen der Aufbau eines dreidimensionalen Netzwerkes möglich ist. Die Bindemittel müssen somit aus reaktiven Partnern bestehen.

Diesen Lackformulierungen ist, wie bereits angedeutet, allen gemeinsam, daß von einem vollständigen Verzicht auf Lösungsmittel keine Rede sein kann und somit eine Erfüllung aller vorstehend erwähnten Anforderungen aus prinzipiellen Gründen nicht möglich ist.

Die zweite Entwicklungsrichtung, die sich aus den oben genannten Anforderungen entwickelte, sind die sog. Pulverlacke. Man versteht darunter thermoplastische Kunststoffe, die in Pulverform auf Substrate aufgetragen werden. Man unterscheidet verschiedene Arten der Auftragstechnik, wie z.B. elektrostatisches Pulverspritzen, elektrostatisches Wirbelsintern, Schüttsintern, Rotationssintern u.a.

Die Entwicklung der Pulverlacktechnologie bedeutet zwar im Sinne eines ökologisch vorteilhaften Lackiersystems eine deutliche Verbesserung. Nachteile in Form hoher Investitionskosten, eines komplizierten Farbtonwechsels und hohen Materialverbrauchs sind jedoch vorhanden. Zu beachten ist ferner, daß die Pulverform des Lackmaterials die Gefahr von Staubexplosionen in sich birgt und die Lagerung sowie der Versand der Lackprodukte Probleme aufwerfen.

Die dritte Entwicklungsrichtung beruht auf dem Gedanken, Lacksysteme auf Basis wäßriger Bindemittelsysteme zu formulieren. Dabei ist zu unterscheiden zwischen Systemen, deren in Wasser dispergierte feste Phase aus bereits in sich pigmentierten Lackpartikeln besteht und Systemen, bei denen Bindemittel- und Pigmentpartikel getrennt nebeneinander vorliegen. Der erste Fall liegt bei den sog. "powder-slurries" vor, während der zweite Fall die Situation bei Einbrenndispersionen beschreibt. Die Entwicklung der "aqueous powder suspensions" bzw. "slurry-paints" beruht auf dem Gedanken, den umweltfreundlichen Pulverlack mit Wasser als Verdünnung zu einen spritzfertigen wäßrigen Lack zu vermischen, der auf konventionellen Lackieranlagen ohne die aufwendigen Verfahren zur Pulverlackierung verarbeitet werden kann. Die Herstellung der "powder-slurries" kann nach verschiedenen Verfahren erfolgen, die alle sehr aufwendig sind und bei denen zunächst ein konventioneller, lösungsmittelhaltiger Lack bzw. ein Pulverlach hergestellt werden muß, der anschließend in eine wäßrige Sekundärdispersion übergeführt wird.

Eine wesentliche Vereinfachung der Herstellung wäßriger Einbrennlackiersysteme besteht nun darin, hochpolymere Bindemitteldispersionen, die z.B. über Emulsionspolymerisation hergestellt wurden, einzusetzen und diese wie eine normale Dispersionsfarbe zu pigmentieren. Der prinzipielle Unterschied zu den oben genannten Sekundärdispersionen besteht darin, daß in derartigen pigmentierten Dispersionen Bindemittel und Pigment getrennt nebeneinander in wäßriger Suspension vorliegen, während es sich bei den Sekundärdispersionen um wäßrige Suspensionen von bereits pigmentierten Lackteilchen handelt. Ein entscheidender Vorteil von Lacksystemen auf der Basis pigmentierter Dispersionen besteht neben verarbeitungstechnischen und ökologischen Vorteilen in der kostengünstigen Herstellweise. Das Bindemittel kann als wäßrige Dispersion, beispielsweise über Emulsions- und/oder Suspensionspolymerisation, hergestellt und unmittelbar eingesetzt werden.

Die hierfür zum Einsatz kommenden Bindemittel-Dispersionen können bei Raumtemperatur bereits verfilmen oder auch erst durch Einbrennvorgänge zum Verfilmen gebracht werden. Einbrenndispersionen auf Wasserbasis, die bei der angewandten Trocknungs- oder Ablüfttemperatur bzw. darunter bereits verfilmen, können in den fertigen Beschichtungen aber zu charakteristischen Lackfehlern, den sog. Kochern, führen.

Diese Kocher entstehen dadurch, daß nach der Applikation des wäßrigen Lackmaterials auf die zu beschichtende Substratoberfläche die Verfilmung an der Lackoberfläche bereits beim Abdunsten des Wassers einsetzt. Das im Inneren des Films noch vorhandene Wasser kann nicht entweichen, da die Filmoberfläche wie eine Dampfsperre wirkt. Erst beim Einbrennvorgang verdampft das Wasser, wobei die bereits verfilmte Oberfläche wieder aufgerissen wird. Infolge der bei erhöhter Temperatur einsetzenden Vernetzung wird die durch den Dampfaustritt zerstörte Filmstelle nicht wieder geschlossen. Es resultiert i.a. eine kraterförmige Schädigung im Lack, die eine Schwachstelle in Bezug auf Korrosionsschutz und mechanische Beanspruchbarkeit darstellt, abgesehen von der Beeinträchtigung des dekorativen Effekts der Lackierung.

Die Vermeidung eines derartigen Lackfehlers kann gelingen durch Anheben der Mindestfilmbildungstemperatur der Bindemitteldispersion auf Werte oberhalb der Ablüft- oder Trocknungstemperatur.

Aus der DE-OS 2 416 446 ist z.B. ein Verfahren zur Oberflächenbeschichtung bekannt, bei dem eine pigmentierte oder nicht pigmentierte wäßrige Dispersion eines schmelzbaren Copolymerisats mit mittleren Teilchendurchmessern im Bereich von 0,5 bis 10 $\mu$m auf das zu beschichtende Substrat aufgebracht wird. Die Mindestfilmbildungstemperatur soll zwischen 10 und 200°C liegen. Die auf das Substrat aufgebrachte Beschichtung soll nach dem vollständigen Ablüften des Wassers in kohärenter Pulverform vorliegen. Das Einbrennen erfolgt bei Temperaturen, bei denen die Parti kel zu einem endlosen, rißfreien Film schmelzen, z.B. im Falle von Acrylatpolymerisaten bei 177°C (15 min.). Die Dicke des Überzugs liegt im Bereich von 2,5 bis 250 $\mu$m. Dieses Beschichtungsverfahren hat jedoch den Nachteil, daß zur Herstellung der Copolymerisate mit den benötigten Teilchengrößen fünf Verfahrensstufen erforderlich sind, was u.a. sehr unökonomisch ist.

Um gegen die verschiedensten Einflüsse resistente Oberflächenbeschichtungen zu erhalten, werden letztere üblicherweise nach der Applikation vernetzt. Dies geschieht entweder über sog. Fremdvernetzung, wobei eine oder mehrere weitere Komponenten, die reaktive Gruppierungen tragen, bei der Formulierung zugemischt werden, ober über Selbstvernetzung, wozu reaktive Monomere in das Bindemittel mit einpolymerisiert werden. Die Vernetzung kann in beiden hier unterschiedenen Fällen z.B. durch Wärme, Licht oder Strahlung induziert werden. Ein Maß für die Widerstandsfähigkeit von Oberflächenbeschichtungen ist, neben der Wasserfestigkeit, die Lösungsmittelbeständigkeit.

Gemäß DE-OS 2 416 446 beträgt in vernetzbaren Copolymerisaten der maximale Gehalt an vernetzungsfähigen Monomereinheiten 10 Gew.-%, bezogen auf die Gesamtmenge der Monomereinheiten in dem Copolymerisat. Vorzugsweise soll das Maximum bei etwa 5 Gew.-% liegen. Größere Mengenanteile gewisser vernetzungsfähiger Monomereinheiten können die Hydrophilie der Copolymerisate erhöhen. Ist das Copolymerisat zu stark hydrophil, dann können daraus hergestellte Überzüge unerwünschte und schädliche Eigenschaften besitzen.

Was die Lösungsmittel- und Wasserbeständigkeit von Einbrennbeschichtungen sowie deren mechanische Beanspruchbarkeit betrifft, so hat sich gezeigt, daß nach der DE-OS 2 416 446 hergestellte Beschichtungen nach dem Einbrennen die diesbezüglich erforderlichen vorteilhaften Eigenschaften häufig nicht besitzen.

Aus der FR-A- 23 22 910 sind Dispersionscopolymerisate bekannt, die 10 bis 25 Gew.-% Comonomereinheiten mit vernetzungsfähigen Gruppen enthalten können. Ihre Herstellung erfolgt durch Emulsionspolymerisation bei 15 bis 30 °C unter Verwendung eines Redoxkatalysators, wobei wäßrige Dispersionen erhalten werden, die nicht lagerungsstabil sind und zu schädlichen Frühvernetzungen neigen, was zu Störungen in den späteren Filmstrukturen führen kann. Zur Verbesserung der Lagerungsstabilität werden die Dispersionen nach dem Ende der Polymerisation durch Zusatz eines tertiären Amins auf $p_H$ 5 bis 9 eingestellt und 10 Minuten lang auf 50 bis 60 °C erhitzt. Ihre Verwendbarkeit als Bindemittel für vernetzbare Oberflächenbeschichtungen ist problematisch und der Amingehalt kann zu Vergilbungen führen.

Die Aufgabe bestand somit darin, ein in Wasser dispergiertes Bindemittel verfügbar zu machen, das einmal, verglichen mit dem Stand der Technik, auf einfache Weise hergestellt werden kann und zum anderen hinsichtlich anwendungstechnischer Parameter, wie Schmelzviskosität, Filmbildungstemperatur, Pigmentverträglichkeit, Lösungsmittel- bzw. Wassserbeständigkeit, Elastizität, Haftung, Glanz und Abbildungsschärfe den an vernetzbare Bindemittel zu stellenden Anforderungen entspricht.

Es wurde nun überraschenderweise gefunden, daß man die vorgenannten Nachteile vorteilhaft überwinden kann, wenn man für die Herstellung von vernetzbaren Oberflächenbeschichtungen ein Bindemittel auf der Basis eines Dispersionscopolymerisats aus olefinisch ungesättigten Monomeren einsetzt, das zu mehr als 10 Gew.-%, bezogen auf das Dispersionscopolymerisat, aus vernetzungsfähige Gruppen tragenden Monomereinheiten besteht und durch radikalisch initiierte Emulsions- oder Suspensionscopolymerisation, vorzugsweise unter Zusatz von Radikalketten übertragenden Substanzen, hergestellt wurde.

Erfindungsgemäß besteht das Dispersionscopolymerisat vorzugsweise zu 11 bis 25 Gew.-%, insbesondere zu 12 bis 20 Gew.-%, aus vernetzungsfähige Gruppen tragenden Comonomereinheiten.

Das dem Stand der Technik zu entnehmende Vorurteil, wonach in vernetzbaren Bindemittelcopolymerisaten der Gehalt an vernetzungsfähige Gruppen tragenden Monomereinheiten den maximalen Wert von 10 Gew.-%, bezogen auf das Copolymerisat, nicht übersteigen soll, wird angesichts des vorstehenden Erfindungsgegenstandes gegenstandslos. Denn es können bei Verwendung von erfindungsgemäßen, vernetzbaren Dispersionscopolymerisaten vernetzte Einbrennbeschichturgen erhalten werden, die außer sehr guter Wasserbeständigkeit auch ausgezeichnete Lösungsmittelbeständigkeiten aufweisen.

Die durchschnittlichen Teilchendurchmesser erfindungsgemäßer, vernetzbarer Dispersionscopolymerisate liegen bevorzugt im Bereich von 0,5 bis 10 $\mu$m, besonders bevorzugt im Bereich von 0,5 bis 5 $\mu$m. Gegenstand der Erfindung sind daher wäßrige Dispersionen zur Herstellung von vernetzbaren Oberflächenbeschichtungen, enthaltend als Bindemittel ein vernetzbares Dispersionscopolymerisat aus olefinisch ungesättigten Monomeren sowie gegebenenfalls weitere Bestandteile aus der Gruppe Pigmente, Farbstoffe, Füllstoffe, wasserlösliche und/oder wasserdispergierbare Harze, Fremdvernetzer, Vernetzungskatalysatoren, Verdickungsmittel, Thixotropierungsmittel, Netzmittel, Korrosionsschutzmittel, Frostschutzmittel, Lichtstabilisatoren, Antioxidantien und Entschäumer, wobei die dispergierten Copolymerisatteilchen durchschnittliche Partikeldurchmesser von 0,5 bis 10 $\mu$m aufweisen, dadurch gekennzeichnet, daß der Anteil an vernetzungsfähige Gruppen tragenden Comonomereinheiten in dem Dispersionscopolymerisat das dürch Emülsions- oder Dispersionscopolymerisation hergestellt würde größer als 10 Gew.-% ist, bezogen auf das Dispersionscopolymerisat, die Mindestfilmbildungstemperatür der Dispersion sur Temperatürbereich von 35 bis 120°C liegt und die Gasübergangstemperatur des Copolymerisats nicht interhalb von 49,5°C, liegt. Die Herstellung des Dispersionscopolymerisats erfolgt durch Emulsions- oder Suspensionscopolymerisation, insbesondere unter Zusatz von Radikalkettenüberträgersubstanzen, besonders bevorzugt Mercaptogruppen enthaltenden Verbindungen.

Das Dispersionscopolymerisat besteht erfindungsgemäß vorzugsweise zu 11 bis 25 Gew.-%, insbesondere zu 12 bis 20 Gew.-%, bezogen auf das Dispersionscopolymerisat, aus vernetzungsfähige Gruppen tragenden Comonomereinheiten, wobei diese Comonomereinheiten vorzugsweise funktionelle, vernetzungsfähige Reste aus der Reihe der Hydroxy-, Amido-, Aldehyd-, Carboxyl-, Amino-, Epoxy-, Thiol-, Cyano-, N-Methylol-, Isocyanato- und/oder blockierte Isocyanato-Gruppen enthalten. Besonders bevorzugt sind Hydroxy-, Carboxyl- und Epoxy-Gruppen.

In einer bevorzugten Ausführungsform enthält die erfindungsgemäßige wäßrige Dispersion zusätzlich ein wasserlösliches und/oder wasserdispergierbares Harz, insbesondere aus der Reihe der Acrylatharze, Melamin-Formaldehydharze und Isocyanatharze.

Die erfindungsgemäßen wäßrigen Dispersionen werden vorzugsweise als Bestandteil von Einbrennlakken, Hydrofüllern, Metallic-Lacken und "Electropowder Coatings" (= EPC-Lacken) verwendet.

Weiterer Gegenstand der Erfindung ist auch ein Verfahren zur Einbrennbeschichtung von Oberflächen fester Substrate unter Verwendung von vorstehend beschriebenen, erfindungsgemäßen wäßrigen Dispersionen, Auftragen der benötigten Dispersionsmenge auf die zu beschichtende Oberfläche, Trocknen und nachfolgendes Einbrennen der getrockneten Dispersionsschicht unter Vernetzung des Bindemittelcopolymerisats, dadurch gekennzeichnet, daß man die Trocknung der aufgetragenen Dispersionsmenge bei einer Temperatur unterhalb der Mindestfilmbildungstemperatur der Dispersion durchführt und danach die getrocknete Beschichtung bei einer Temperatur oberhalb der Glasübergangstemperatur (Tg) einbrennt. Bevorzugt ist eine Mindestfilmbildungstemperatur der Dispersion im Temperaturbereich von 35 bis 120°C, insbesondere 40 bis 80°C.

Die Herstellung erfindungsgemäßer Bindemittel-Dispersionen erfolgt bevorzugt durch Emulsionscopolymerisation, wobei sowohl das über wenigstens zwei Stufen verlaufende Verfahren der Saatpolymerisation, als auch einstufige Verfahren angewandt werden können, die bei entsprechender Fahrweise die gewünschten Teilchengrößen hervorbringen können. Es können außerdem auch Suspensionscopolymerisationsverfahren angewandt werden.

4

Wird das Verfahren der Saatpolymerisation angewendet, so sollte man aus praktischen Gründen die Zahl der Wachstumsschritte bzw. Quellschritte möglichst niedrig halten. Bevorzugt werden Saatpolymerisationen, die in höchstens zwei Schritten einen grobteiligen Latex erbringen können. Der erste Schritt besteht dabei in der Herstellung eines Saatlatex, während im zweiten Schritt der Saatlatex unter möglichst vollständiger Vermeidung von Teilchenneubildungen auf die gewünschten Teilchendurchmesser aufgequollen wird. Dazu geht man bevorzugt von einem weitgehend monodispersen Latex nach den Stand der Technik als Saatgrundlage aus, auf den in einem weiteren Schritt soviel Monomeres aufgebracht wird, daß unter Beibehaltung der Monodispersität im endgültigen Latex ein mittlerer Teilchendurchmesser größer als 0,5 $\mu$m erzielt wird. Wie bereits bekannt (vgl. Houben-Weyl, Methoden der Organischen Chemie Bd. 14 I, 339 f, (1961)), ist dabei die Dosierung des Emulgators bzw. die jeweilige Konzentration an Emulgator von wesentlicher Bedeutung. So ist z.B. u.a. darauf zu achten, daß die Oberflächenbedeckung der Partikel mit ionischem Emulgator bevorzugt unter 100 % liegt.

Als Emulgatorcn können ionische und nichtionische Emulgatoren oder Mischungen davon eingesetzt werden. Von den anionischen Emulgatoren werden z.B. bevorzugt eingesetzt die Natriumsalze höherer Fettalkoholsulfate, höherer Alkylsulfonate, Alkylarylsulfonate sowie die Alkali- und/oder Ammoniumsalze von Alkyl- oder Alkylarylpolyglykolethersulfonaten oder -sulfaten.

Bei den nichtionischen Emulgatoren werden bevorzugt oxethylierte Fettalkohole oder oxethylierte Alkylphenole eingesetzt.

Dle Gesamtmenge des während der Copolymerisation zudosierten Emulgators ist im Hinblick auf die gewünschte Teilchengröße nach Möglichkeit gering zu halten. Ist beispielsweise zur Erhöhung der Lagerungsstabilität der Dispersion eine bestimmte Emulgatormenge notwendig, so kann diese teilweise oder vollständig nachträglich zudosiert werden.

Die zur Copolymerisation eingesetzten olefinisch ungesättigten, copolymerisationsfähigen Monomeren müssen so ausgewählt bzw. kombiniert werden, daß das resultierende copolymere Bindemittel und das fertige Beschichtungssystem eine solchermaßen "minimale Filmbildungstemperatur" (MFT) aufweisen, daß letztere noch oberhalb der Ablüft- oder Trocknungstemperatur liegt. Als Anhaltspunkt zur praktischen Auswahl der Monomeren bezüglich der MFT kann die Glastemperatur der betreffenden Homopolymerisate herangezogen werden, um auf diese Weise entsprechende Filmbildungstemperaturen einzustellen.

Das copolymere Bindemittel muß zur Erzielung der gewünschten anwendungstechnischen Eigenschaften im fertigen Lack neben nichtfunktionellen Monomereinheiten erfindungsgemäß außerdem mehr als 10 Gew.-% funktionelle Monomereinheiten enthalten, mit denen sich Vernetzungsreaktionen durchführen lassen. Dabei kann sowohl eine Selbstvernetzung der Copolymerisatmoleküle als auch eine Fremdvernetzung mit anderen, zusätzlich eingebrachten Komponenten vorgenommen werden.

Als nichtfunktionelle olefinisch ungesättigte Monomere werden bevorzugt Ester der Acryl- und Methacrylsäure eingesetzt, deren Alkoholkomponente 1 bis 18 C-Atome enthalten kann. Beispiele dafür sind Ester mit den Resten Methyl-, Ethyl-, Methylpropyl-, n-Butyl-, 2-Ethylhexyl-, Heptyl-, Octyl-, Propyl-, 2-Methylbutyl, Pentyl-, Methoxymethyl-, Ethoxymethyl-, Ethoxyethyl-, Isobutyl-, Cyclohexyl- oder n-Hexyl- als Alkoholkomponente.

Des weiteren können auch andere nichtfunktionelle Monomere, wie beispielsweise Vinylaromaten, eingesetzt werden, bevorzugt Styrol, Vinyltoluol und $\alpha$-Methylstyrol. Auch Acrylnitril und Methacrylnitril können vorteilhaft eingesetzt werden.

Um Vernetzungsreaktionen im applizierten Lack bei der Verfilmung durchführen zu können, müssen sowohl im Falle der Selbstvernetzung als auch im Falle der Fremdvernetzung Monomereinheiten mit funktionellen Gruppen in dem Bindemittelcopolymerisat vorhanden sein. Unter Monomeren mit funktionellen Gruppen sind solche zu verstehen, die neben ihrer olefinischen Doppelbindung, mit der sie während der Bindemittelherstellung in das entstehende Copolymerisat einpolymerisiert werden, zusätzlich noch chemische Gruppierungen tragen, die zu einem späteren Zeitpunkt, bevorzugt nach der Applikation des fertigen Lacks unter Einwirkung von Energie (thermische, optische, Strahlen) und/oder Katalysatoren, mit chemischen Gruppierungen der gleichen oder einer anderen Art umgesetzt werden können, in der Weise, daß ein Netzwerk entsteht.

Bevorzugte Beispiele für hier einsetzbare chemische Gruppierungen, die im applizierten Lackmaterial zu Vernetzungen führen können, sind Carbonsäure-, Sulfosäure-, Hydroxy-, Amino-, Amido-, Keto-, Aldehyd-, Lactam-, Lacton-, Isocyanat- und Epoxygruppen. Copolymerisationsfähige Monomere, die derartige funktionelle Gruppierungen tragen, sind bekannt.

Von Monomeren, die Carbonsäuregruppierungen tragen, werden vorzugsweise Acrylsäure, Methacrylsäure, Crotonsäure, Itaconsäure, Fumarsäure, Maleinsäure, Maleinsäurehalbester, bzw. die Halbester der Itacon- und der Fumarsäure eingesetzt. Besonders bevorzugt sind Acryl- und Methacrylsäure.

Von Monomeren, die zur Vernetzung geeignete Epoxidgruppierungen tragen, werden bevorzugt Glycidylmethacrylat, Glycidylacrylat und Allylglycidylether eingesetzt.

Weitere copolymerisierbare Monomere, die funktionelle Gruppierungen tragen und für Vernetzungsreaktionen erfindungsgemäßer Bindemittel ausgenutzt werden können, sind Monomere mit Isocyanatgruppen, z.B. bevorzugt Isocyanatoethylmethacrylat, sowie deren Derivate mit blockierter Isocyanatgruppe, ferner Aminoalkylverbindungen, vorzugsweise z.B. Methylaminoethylmethacrylat und tert.-Butylaminoethylmethacrylat, Amide, vorzugsweise z.B. Methacrylamid, N-Alkoxyalkylamide, vorzugsweise z.B. Methoxymethylmethacrylamid oder Ethoxymethylmethacrylamid, Hydroxyalkylamide, vorzugsweise z.B. N-Methylolmethacrylamid, Hydroxyalkylester, vorzugsweise z.B. Hydroxyethylmethacrylat und Hydroxypropylmethacrylat; ferner die Analoga der oben genannten Methacrylsäurederivate von anderen ungesättigten Säuren, vorzugsweise von Acrylsäure, Itaconsäure, Crotonsäure.

Bevorzugte Bindemitteldispersionscopolymerisate können als Monomereinheiten, bezogen auf das Dispersionscopolymerisat, beispielsweise 0 bis 85 Gew.-% Methylmethacrylat, 60 bis 0 Gew.-% Butylacrylate, 0 bis 20 Gew.-% Hydroxyethylmethacrylat, 20 bis 0 Gew.-% Glycidylmethacrylat und 0 bis 20 Gew.-% Acrylsäure oder Methacrylsäure enthalten. Besonders bevorzugte Bindemitteldispersionen können, bezogen auf das Dispersionscopolymerisat, beispielsweise 50 bis 85 Gew.-% Methylmethacrylat, 15 bis 50 Gew.-% Butylacrylat, 0 bis 15 Gew.-% Hydroxyethylmethacrylat, 15 bis 0 Gew.-% Glycidylmethacrylat und 2 bis 10 Gew.-% Acrylsäure oder Methacrylsäure als Monomereinheiten enthalten.

Neben der Selbstvernetzung besteht auch noch die Möglichkeit der sog. Fremdvernetzung. Hierzu wird eine fertige Bindemittelcopolymerisatdispersion, die einen oder mehrere der oben beschriebenen Typen funktioneller Monomereinheiten enthält, mit einer weiteren niedermolekularen, oligomeren oder polymeren Verbindung, die ebenfalls funktionelle Gruppierungen der oben genannten Art trägt, vermischt.

Die Bindemittelvernetzung erfolgt auch bei der Fremdvernetzung, vorzugsweise beim Einbrennen, bevorzugt durch Reaktion zwischen dem funktionalisierten Bindemittelcopolymerisat und der zugesetzten Fremdkomponente. Dabei kann nicht immer ausgeschlossen werden, daß beide Komponenten auch noch mit sich selbst Reaktionen/Vernetzungen eingehen können.

Beispiele für vernetzende Fremdkomponenten sind bevorzugt Melamin-Formaldehyd-Harze, Acrylat-Harze und verkappte Isocyanat-Harze, d.h. Isocyanat-Harze mit blockierter Isocyanatgruppe, die mit oder ohne Einwirkung von Katalysatoren, wie vorzugsweise Malein-, Zitronen-, Phosphor-, Alkylphosphorsäure, p-Toluolsulfonsäure und/oder Naphthalindisulfonsäure, in Gegenwart von Bindemittelcopolymerisaten, die bevorzugt Hydroxyl-, Amid- oder Carboxylgruppen bzw. andere der oben beschriebenen funktionellen Gruppierungen tragen, beim Einbrennen hochvernetzte Beschichtungen ergeben können.

Ganz besonders bevorzugt werden Acrylharze und/oder methylverätherte Melaminharze (z.B. (R)-Maprenal MF 900) als fremdvernetzende Komponenten eingesetzt. In einer bevorzugten Ausführungsform der Beschichtung unter Fremdvernetzung werden beispielsweise 20 Gew.-Teile einer erfindungsgemäßen Dispersion mit 3,4 Gew.-Teilen Maprenal MF 900 abgemischt und nach der Trocknung 30 Minuten bei 180°C eingebrannt.

Überraschenderweise werden erfindungsgemäße Dispersionscopolymerisate mit besonders vorteilhaften anwendungstechnischen Eigenschaften erhalten, wenn deren Herstellung durch Emulsions- oder Suspensionscopolymerisation unter Zusatz von Radikalkettenüberträgersubstanzen erfolgt. Als Radikalkettenüberträgersubstanzen kommen dabei bevorzugt solche bekannten Verbindungen infrage bzw. in solchen Mengen zum Einsatz, wie sie z.B. bei der Emulsionspolymerisation häufig zum Zweck der Molekulargewichtsregelung eingesetzt werden, z.B. Mercaptane, wobei bevorzugt n-Dodecylmercaptan, tert.-Dodecylmercapten, Thioglykolsäure und Thioglykolsäureester verwendet werden, oder auch halogenierte Verbindungen, wie z.B. Tetrachlorkohlenstoff, Bromtrichlormethan, Chlorbenzol bzw. andere übertragungsaktive Verbindungen, bevorzugt Toluol und α-Methylstyrol. Besonders bevorzugt sind polyfunktionelle HS-Gruppen enthaltende Radikalkettenüberträger, insbesondere z.B. die Thioglykolsäureester von Ethylenglykol, 1,2-Propylenglykol, 1,3-Propylenglykol, 1,2-Butylenglykol, 1,3-Butylenglykol, 1,4-Butylenglykol, Glycerin, Trimethylolpropan, Pentaerythrit und Di-, Tri- oder Tetraethylenglykol. Ganz besonders bevorzugt ist Tetrakismercaptoacetylpentaerythrit.

In einer weiteren bevorzugten Ausführungsform wird den oben beschriebenen grobteiligen Bindemittelcopolymerisatdispersionen außerdem eine wasserlösliche Substanz zugesetzt, die vorzugsweise die rheologischen Eigenschaften des wäßrigen Systems verbessert. Speziell ist hier häufig eine verdickende Eigenschaft erwünscht, wie sie beispielsweise bevorzugt durch Zusatz wasserlöslicher Polymerer, wie modifizierten Cellulosen, z.B. Celluloseäthern, und/oder Poly(meth-)acrylat-Verdickern, Polyacrylamiden, Polyvinylpyrrolidon und anderen erzielt wird. Aber auch andere Einflußnahmen auf die rheologischen Eigenschaften der wäßrigen Copolymerisatdispersionen sowie der daraus hergestellten pigmentierten Lackabmischungen können in bevorzugten Ausführungsformen von Vorteil sein. Beispielsweise ist häufig eine thixotropierende Beeinflussung von Interesse, um einer möglichen Absetzungsneigung dispergierter Partikel in dem wäßrigen System entgegenzuwirken sowie gegebenenfalls gleichzeitig die Ablaufneigung bereits applizierter Lacke auf mehr oder weniger senkrecht stehenden Flächen zu vermeiden. Bevorzugt werden hier in wäßrigen Systemen wirksame Thixotropierungsmittel eingesetzt, wie z.B. Titanate und/oder kolloidale $SiO_2$-Typen (z.B. Aerosil). Gegebenenfalls können der Einsatz der oben genannten wasserlöslichen und rheologiewirksamen Polymeren und der Einsatz thixotropiewirksamer Agentien vorteilhaft miteinander kombiniert und dabei gegebenenfalls resultierende synergistische Effekte beider Komponenten ausgenützt werden.

Die Erfindung wird durch die nachstehenden Beispiele näher erläutert.

Vergleichsbeispiel 1

Herstellung einer Bindemitteldispersion (Dispersionscopolymerisat ohne funktionelle Monomereinheiten, als Vergleich).

A) Saatgrundlage (1 VA)

Die als Saatgrundlage eingesetzte Dispersion wird nach dem folgenden Verfahren hergestellt:

Zu einer Vorlage von 750 Gew.-Teilen Wasser werden bei 80°C 7,5 Gew.-Teile einer Monomeremulsion gegeben, die aus 438 Gew.-Teilen $H_2O$, 31,5 Gew.-Teilen Isooctylphenolpolyglykolether (10 EO-Einheiten), 15,7 Gew.-Teile Natriumlaurylsulfat, 31,5 Gew.-Teile Trichlorbrommethan, 787,5 Gew.-Teile Methylmethacrylat und 787,5 Gew.-Teile Butylacrylat besteht. Der Polymerisationsstart erfolgt durch Zusatz von 10 Gew.-Teilen einer Lösung von 2 Gew.-Teilen Ammoniumpersulfat in 100 Gew.-Teilen $H_2O$ ebenfalls bei 80°C. Der Rest der Initiatorlösung wird mit der übrigen Monomeremulsion während 4 Stunden zudosiert. Die Nachreaktion erfolgt während 1 Stunde ebenfalls bei 80°C.

Feststoffgehalt der resultierenden Dispersion: 55,1 Gew.-%; mittlere Teilchengröße: 0,22 $\mu$m.

B) Saatpolymerisation, Versuch 1 VB/1

Zu einer Mischung aus 18,2 Gew.-Teilen Saatgrundlage 1 VA und 714 Gew.-Teilen Wasser werden 100 Gew.-Teile einer Mischung aus 480 Gew.-Teilen Methylmethacrylat, 120 Gew.-Teilen Butylacrylat und 6 Gew.-Teilen Tetrakismercaptoacetylpentaerythrit (Radikalkettenüberträger) zugesetzt und mit 10 Gew.-Teilen einer Lösung von 1,5 Gew.-Teilen Ammoniumpersulfat in 100 Gew.-Teilen Wasser die Polymerisation bei 80°C gestartet.

Nach 30 Minuten Vorpolymerisation wird mit der Zudosierung der restlichen Monomerenmenge begonnen (Gesamtdosierzeit: 7,5 Stunden). Nach Zusatz der Hälfte der Monomerenmenge wird mit der Zudosierung einer Lösung von 0,6 Gew.-Teilen Natriumlaurylsulfat in 100 Gew.-Teilen Wasser begonnen. Die Dosierung dieser Lösung erfolgt in der Weise, daß bis zum Ende der Monomerendosierung die Hälfte dieser Lösung zugesetzt ist und danach der verbliebene Rest auf einmal zugegeben wird.

Feststoffgehalt der resultierenden Dispersion: 39,5 Gew.-%; mittlere Teilchengröße: 0,70 $\mu$m.

C) Unter Einsatz der Saatgrundlage 1 VA werden nach der unter B), Versuch 1 VB/1 beschriebenen Verfahrensweise die weiteren Polymerisationsversuche 1 VB/2, 1 VB/3 und 1 VB/4 mit der Abänderung durchgeführt, daß dabei der Anteil an Radikalkettenüberträger (= RKÜ) in der in Tabelle 1 angegebenen Weise variiert wird. Die RKÜ-Mengen sowie die Eigenschaften der resultierenden Dispersionen sind in der Tabelle 1 zusammengefaßt wiedergegeben. Anwendungstechnische Eigenschaften der Dispersionen sind in Tabelle 2 zusammengefaßt.

Tabelle 1

| Versuch Nr. | Emulsionscopolymerisation | | Dispersion | | Copolymerisat | |
|---|---|---|---|---|---|---|
| | Saatlatex | Gew.-Tl. RKÜ | Partikelgröße (μm) | Feststoffgehalt (Gew.-%) | Schmelzvisk./mPa•s bei 180° C | Glasübergangstemp. (° C) +) |
| 1 VB/1 | 1 VA | 6 | 0,70 | 39,5 | 650 000 | 65,5 |
| 1 VB/2 | 1 VA | 12 | 0,75 | 39,5 | 138 000 | 60 |
| 1 VB/3 | 1 VA | 18 | 0,74 | 39,0 | 40 000 | 56 |
| 1 VB/4 | 1 VA | 30 | 0,74 | 38,2 | 1 500 | 49,5 |

Saatpolymerisationen nach Vorschrift 1 VB/1 unter Verwendung steigender Mengen RKÜ (Tetrakismercaptoacetylpentaerythrit)

+)Ermittelt durch Differentialthermoanalyse (DTA)

Tabelle 2: Anwendungstechnische Eigenschaften pigmentierter und unpigmentierter Einbrennlacke auf Basis
von Dispersionen der Versuche 1 VB/1 bis 1 VB/4.

| Dispersion aus Versuch Nr. | Beschichtung 1) mit unpigmentierter 3) Dispersion | | | Beschichtung 1) mit pigmentierter 4) Dispersion | | |
|---|---|---|---|---|---|---|
| | pulverf. Beschichtg. nach Ablüften der Dispersion | nach 30 Min. bei 150°C Einbren- nung 2) | Dicke der Beschich- tung (µm) | pulverf. Beschichtg. nach Ablüften der Dispersion | nach 30 Min. bei 150°C Einbren- nung 2) | Dicke der Beschich- tung (µm) |
| 1 VB/1 | ++ | Rißbild. | 50 | ++ | Rißbild. | 27 |
| 1 VB/2 | ++ | + | 30 | ++ | + | 35 |
| 1 VB/3 | ++ | + | 30 | ++ | + | 30 |
| 1 VB/4 | .++ | + | 30 | ++ | + | 22 |

1) Es werden phosphatierte Eisenbleche (Bonder 132) beschichtet.

2) Alle Einbrennbeschichtungen zeigen eine Xylolbeständigkeit von weniger als 1 Minute bei 20°C.

++ = Rißfreie Pulverschicht

+ = Rißfreier Film

3) Unpigmentierte Dispersionen:  Festkörper ca. 39 Gew.-%,
pH = 2,5

Zusammensetzung: 100,0 Gew.-Tl. Dispersion (Feststoffgehalt 40 Gew.-%)

    4,5 Gew.-Tl. Netzmittelmischungx)
104,5 Gew.-Tl.

4) Pigmentierte Dispersionen:  Pigment-Bindemittelverhältnis
= 0,2 : 1, pH-Wert = 8,9

Zusammensetzung: 100,0 Gew.-Tl. Dispersion (Feststoffgehalt 40 Gew.-%)

    4,5 Gew.-Tl. Netzmittelmischungx)
   30,0 Gew.-Tl. TiO$_2$-Paste xx)
134,5 Gew.-Tl.

**x)** Netzmittelmischung: 10 Gew.-Tl. Orotan 731 SD **a)**

25 gew.-%ig in $H_2O$

20 Gew.-Tl. Triton CF 10 **b)**

15 Gew.-Tl. Natriumnitrit,

10 gew.-%ig in $H_2O$

_____

45 Gew.-Tl.


**xx)** $TiO_2$-Paste: 320,0 Gew.-Tl. TiO2 Cl 310 (Rutiltyp, Kronos

Cl 310)

4,8 Gew.-Tl. Triton CF 10 **b)**

3,2 Gew.-Tl. Orotan 731 SD **a)**

25 gew.-%ig in $H_2O$

10,2 Gew.-Tl. Viscalex HV 30 (Polyacrylat-

Verdicker)

450,0 Gew.-Tl. $H_2O$

788,2 Gew.-Tl.


**a)** Orotan 731 SD = Na-Salz eines Copolymerisats aus Diisobuten und Maleinsäureanhydrid


**b)** Triton CF 10 = Isooctylphenolpolyglykolbenzylether


Beispiel 1

Analog dem Vergleichsbeispiel 1 B), Versuch 1 VB/1 werden Saatpolymerisationen unter Verwendung der Saatgrundlage 1 VA aus Vergleichsbeispiel 1, A) durchgeführt. Es wird jeweils eine Monomerenmischung von insgesamt 600 Gewichtsteilen eingesetzt, in welcher die Comonomeren Methylmethacrylat und Butylacrylat im Gewichtsverhältnis 4:1 vorliegen und außerdem die funktionelle und vernetzungsfähige Gruppen tragenden Comonomeren Methacrylsäure (MAS) und Glycidylmethacrylat (Glyma) mit den in der Tabelle 3 angegebenen prozentualen Anteilen (Gew.-%) enthalten sind. Tabelle 3 gibt auch den Feststoffgehalt der resultierenden Dispersionen wieder. Das Vergleichsbeispiel 2 in Tabelle 3 enthält solche prozentualen Anteile an comonomerem MAS bzw. Glyma, wie sie dem bekannten Stand der Technik entnommen werden können. Der Anteil an RKÜ (Tetrakismercaptoacetylpentaerythrit) beträgt in allen Fällen 3 Gew.-%, bezogen auf die Monomerenmischung. Der mittlere Teilchendurchmesser der resultierenden Dispersionen beträgt ca. 0,8 $\mu$m.

Tabelle 3

| Variation des Gehalts an funktionelle, vernetzungsfähige Gruppen tragenden Comonomereinheiten (MAS, Glyma) in Copolymerisatdispersionen | | | | |
|---|---|---|---|---|
| Dispersion Nr. | Anteil MAS (Gew.-%) | Anteil Glyma (Gew.-%) | Anteil MAS + Glyma im Copolymerisat (Gew.-%) | Feststoffgehalt der Dispersion (Gew.-%) |
| Vergleichsbeisp. 2 | 3,7 | 4,6 | 8,3 | 40,2 |
| 1 B/1 | 5,3 | 6,6 | 11,9 | 38,2 |
| 1 B/2 | 6,0 | 7,6 | 13,6 | 37,7 |
| 1 B/3 | 6,8 | 8,5 | 15,3 | 37,8 |

Tabelle 4 zeigt die Lösungsmittelbeständigkeit von Klarlacken, hergestellt aus den in Tabelle 3 aufgeführten Dispersionen (= Bindemitteldispersionen). Dazu werden jeweils phosphatierte Eisenbleche (Bonder 132) mit den Klarlackdispersionen beschichtet, bei Raumtemperatur getrocknet und anschließend bei 150°C 30 Minuten eingebrannt. Die resultierende Schichtdicke der Klarlacke beträgt ca. 27 bis 30 μm.

Im einzelnen zeigt Tabelle 4 die Xylolbeständigkeit der Klarlacke bei 20°C (in Minuten) sowie die Wasserbeständigkeit bei 20°C (in Stunden). Wie das Ergebnis zeigt, sind die aus den erfindungsgemäßen Dispersionen Nr. 1 B/1, 1 B/2 und 1 B/3 hergestellten Beschichtungen den aus dem Vergleichsbeispiel 2 hergestellten deutlich überlegen.

Tabelle 4: Lösungsmittelbeständigkeit von eingebrannten Dispersions-Klarlacken 1), hergestellt aus den Dispersionen Nr. 1 B/1, 1 B/2, 1 B/3 sowie Vergleichsbeispiel 2.

| Einbrennbeschichtung aus Lackdispersion, hergestellt aus Bindemitteldispersion Nr. | Vergleichs-beispiel 2 | 1 B/1 | 1 B/2 | 1 B/3 |
|---|---|---|---|---|
| Xylolbeständigkeit des Klarlacks bei 20°C in Minuten (') | 6' | 23' | 170' | 510' |
| Wasserbeständigkeit des Klarlacks bei 20°C in Stunden (h) | 350h | 480h | 480h | 480h |

1) Rezeptur zur Formulierung der Klarlacke:

    100,00 Gew.-Teile    Dispersion/40 Gew.-% Feststoffgehalt

      2,00 Gew.-Teile    Netzmittelmischung x)

    102,00 Gew.-Teile

Alle Rezepturbestandteile werden unter Rühren der vorgelegten Dispersion beigemischt.

x) Netzmittelmischung:

    10,00 Gew.-Teile Orotan 731 SD/25 gew.-%ig in $H_2O$

    20,00 Gew.-Teile Triton CF 10 15,00 Gew.-Teile Natriumnitrit/10 gew.-%ig in $H_2O$

    45,00 Gew.-Teile

Beispiel 2

Es werden analog dem Beispiel 1 Saatpolymerisationen unter Verwendung der Saatgrundlage 1 VA und jeweils einer Gesamtmonomerenmischung von 600 Gewichtsteilen durchgeführt. In Abänderung zu Beispiel 1 enthält die Gesamtmonomerenmischung neben MAS und Glyma noch Hydroxyethylmethacrylat (= Hema) als Comonomeres mit funktioneller, vernetzungsfähiger Gruppe in den in Tabelle 5 angegebenen prozentualen Anteilen (Gew.-%), bezogen auf die Gesamtmonomerenmischung, in welcher die Comonomeren Methylmethacrylat und Butylacrylat stets im Gewichtsverhältnis 4:1 vorliegen. Der Anteil an RKÜ beträgt in allen Versuchen 4 Gew.-%. Der mittlere Teilchendurchmesser der resultierenden Dispersionen liegt im Bereich von 0,8 bis 0,9 μm. Tabelle 5 zeigt außerdem den prozentualen Gesamtanteil (Gew.-%) an Comonomeren mit funktioneller, vernetzungsfähiger Gruppe sowie den Feststoffgehalt (Gew.-%) der bei den Versuchen 2 B/1, 2 B/2 und 2 B/3 resultierenden Dispersionen, neben dem Vergleichsbeispiel 2.

Tabelle 5

| Variation des Gehalts an funktionelle, vernetzungsfähige Gruppen tragenden Comonomereinheiten (MAS, Glyma, Hema) in Copolymerisatdispersionen. | | | | | |
|---|---|---|---|---|---|
| Dispersion Nr. | Anteil MAS (Gew.-%) | Anteil Glyma Gew.-%) | Anteil Hema (Gew.-%) | Anteil MAS + Glyma + Hema im Copolymerisat (Gew.-%) | Feststoffgehalt der Dispersion (Gew.-%) |
| Vergleichsbeispiel 2 | 3,7 | 4,6 | - | 8,3 | 40,2 |
| 2 B/1 | 3,5 | 4,4 | 4,0 | 11,9 | 37,9 |
| 2 B/2 | 3,5 | 4,3 | 5,8 | 13,6 | 37,6 |
| 2 B/3 | 3,4 | 4,3 | 7,6 | 15,3 | 40,6 |

Die erhaltenen Dispersionen werden als selbstvernetzende und als fremdvernetzende Bindemitteldispersionen in Einbrennlacksystemen ausgeprüft. Das Ergebnis ist in Tabelle 6 zusammengefaßt wiedergegeben. Die Formulierung der Lacke erfolgt gemäß den nachstehenden Rezepturen Nr. 1 bis 4:

Rezepturen

Nr.1: Klarlack, selbstvernetzend, ohne Melaminharz und
ohne Katalysator 100,00 Gew.-Teile Bindemitteldispersion/40 gew.-%ig
      0,50 Gew.-Teile Natriumnitrit/10 gew.-%ig in $H_2O$
      2,00 Gew.-Teile Netzmittelmischung [x]
    102,50 Gew.-Teile


Nr.2: Klarlack, fremdvernetzend, mit Melaminharz und
Katalysator 100,00 Gew.-Teile Bindemitteldispersion/40 gew.-%ig
      0,50 Gew.-Teile Natriumnitrit/10 gew.-%ig in $H_2O$
      2,00 Gew.-Teile Netzmittelmischung [x]
      6,80 Gew.-Teile Maprenal MF 900/100 % (= Methyl-
                    veräthertes Melamin-Formaldehyd-Harz)
      0,80 Gew.-Teile Katalysatormischung [xx]
    110,10 Gew.-Teile


Nr.3: Weißlack, selbstvernetzend, ohne Melaminharz und
ohne Katalysator 100,00 Gew.-Teile Bindemitteldispersion/40 gew.-%ig
      0,50 Gew.-Teile Natriumnitrit/10 gew.-%ig in $H_2O$
      2,00 Gew.-Teile Netzmittelmischung [x]
    102,50 Gew.-Teile


Nr.4: Weißlack, fremdvernetzend, mit Melaminharz und
Katalysator 110,10 Gew.-Teile Klarlack obiger Rezeptur Nr. 2
     16,00 Gew.-Teile $TiO_2$-Paste [xxx]
      8,00 Gew.-Teile Wasser
    134,10 Gew.-Teile


    Alle Rezepturbestandteile werden jeweils unter Rühren der vorgelegten Dispersion beigemischt. Maprenal MF 900 wird auf 50 Gew.-% Feststoffgehalt mit Wasser verdünnt.

x) <u>Netzmittelmischung:</u>

10,00 Gew.-Teile Orotan 731 SD/25 gew.-%ig in $H_2O$

20,00 Gew.-Teile Triton CF 10

<u>15,00 Gew.-Teile Natriumnitrit/10 gew.-%ig in $H_2O$</u>

45,00 Gew.-Teile

xx) <u>Katalysatormischung:</u>

36,40 Gew.-Teile p-Toluolsulfonsäure 46,00 Gew.-Teile $H_2O$

<u>17,00 Gew.-Teile Dimethylaminoethanol</u>

99,40 Gew.-Teile

xxx) <u>$TiO_2$-Paste:</u>

400,00 Gew.-Teile $TiO_2$ Cl 310

4,80 Gew.-Teile Triton CF 10 3,20 Gew.-Teile Orotan 731 SD/25 gew.-%ig in $H_2O$

<u>192,00 Gew.-Teile $H_2O$</u>

600,00 Gew.-Teile

Tabelle 6 zeigt die Lösungsmittelbeständigkeit von Klarlacken und Weißlacken, selbstvernetzend und fremdvernetzend, hergestellt aus den in Tabelle 6 aufgeführten Bindemitteldispersionen Nr. 2 B/1, 2 B/2, 2 B/3 sowie Vergleichsbeispiel 2 entsprechend den nach Tabelle 5 angegebenen Rezepturen. Dazu werden jeweils phosphatierte Eisenbleche (Bonder 132) mit den entsprechenden Lackdispersionen beschichtet, bei Raumtemperatur getrocknet und anschließend bei 180°C 30 Minuten eingebrannt. Die resultierenden Lackschichten haben eine Dicke von ca. 30 $\mu$m.

Im einzelnen zeigt Tabelle 6 die Xylolbeständigkeit der eingebrannten Lacke bei 20°C (in Minuten), ferner deren Ethanolbeständigkeit bei 20°C (in Minuten) sowie deren Wasserbeständigkeit bei 20°C (in Stunden). Wie das Ergebnis zeigt, sind die aus den erfindungsgemäßen Bindemitteldispersionen Nr. 2 B/1, 2 B/2 und 2 B/3 hergestellten Beschichtungen den aus dem Vergleichsbeispiel 2 hergestellten deutlich überlegen.

15

Tabelle 6: Lösungsmittelbeständigkeit von Klar- und Weißlacken in Form von selbst- und fremdvernetzenden Einbrennbeschichtungen
(30 Minuten bei 180°C eingebrannt)

| Lackdispersion, hergestellt aus Bindemitteldispersion Nr. | Vergleichs-beispiel 2 | 2 B/1 | 2 B/2 | 2 B/3 |
|---|---|---|---|---|
| a) Xylolbeständigkeit der Einbrennbeschichtungen bei 20°C, angegeben in Minuten (') | | | | |
| Klarlack (selbstvernetzend) | 25' | 55' | 65' | 110' |
| Weißlack (selbstvernetzend) | 35' | 50' | 90' | 100' |
| Klarlack (fremdvernetzend) | 150' | 960' | 7560' | 3060' |
| Weißlack (fremdvernetzend) | 140' | 1320' | 2880' | 7200' |
| b) Ethanolbeständigkeit der Einbrennbeschichtungen bei 20°C, angegeben in Minuten (') | | | | |
| Weißlack (selbstvernetzend) | 1' | 1' | 3' | 10' |
| Weißlack (fremdvernetzend) | 65' | 960' | 8640' | 8640' |
| c) Wasserbeständigkeit der Einbrennbeschichtungen bei 20°C, angegeben in Stunden (h) | | | | |
| Klarlack (selbstvernetzend) | 1300h | >3000h | >3000h | >3000h |
| Weißlack (selbstvernetzend) | 1000h | >3000h | >3000h | >3000h |
| Klarlack (fremdvernetzend) | 650h | 2600h | 2600h | >3000h |
| Weißlack (fremdvernetzend) | 264h | 1350h | >3000h | 1250h |

**Patentansprüche**

**Patentansprüche für folgende Vertragsstaaten : BE, DE, FR, GB, IT, NL, SE**

1. Wäßrige Dispersion zur Herstellung von vernetzbaren Oberflächenbeschichtungen, enthaltend als Bindemittel ein vernetzbares Dispersionscopolymerisat aus olefinisch ungesättigten Monomeren sowie gegebenenfalls weitere Bestandteile aus der Gruppe Pigmente, Farbstoffe, Füllstoffe, wasserlösliche und/oder wasserdispergierbare Harze, Fremdvernetzer, Vernetzungskatalysatoren, Verdickungsmittel, Thixotropierungsmittel, Netzmittel, Korrosionsschutzmittel, Frostschutzmittel, Lichtstabilisatoren, Antioxidantien und Entschäumer, wobei die dispergierten Copolymerisatteilchen durchschnittliche Partikeldurchmesser von 0,5 bis 10 µm aufweisen, dadurch gekennzeichnet, daß der Anteil an vernetzungsfähige Gruppen tragenden Comonomereinheiten in dem Dispersionscopolymerisat das dürch Emülsions- oder Süspensionscopolymerisations hergestellt würde, größer als 10 Gew.-% ist, bezogen auf das Dispersionscopolymerisat, die Mindestfilmbildungstemperatur der Dispersion im Temperaturbereich von 35 bis 120°C liegt und die Glasübergangstemperatur des Copolymerisats nicht ünterhalb von 49,5°C, liegt.

2. Wäßrige Dispersion nach Anspruch 1, dadurch gekennzeichnet, daß das Dispersionscopolymerisat unter Zusatz von Radikalkettenüberträgersubstanzen hergestellt wurde.

3. Wäßrige Dispersion nach Anspruch 2, dadurch gekennzeichnet, daß Mercaptogruppen enthaltende Verbindungen als Radikalkettenüberträger verwendet wurden.

4. Wäßrige Dispersion nach Ansprüchen 1 bis 3, dadurch gekennzeichnet, daß das Dispersionscopolymerisat zu 11 bis 25 Gew.-%, bezogen auf das Dispersionscopolymerisat, aus vernetzungsfähige Gruppen tragenden Comonomereinheiten besteht.

5. Wäßrige Dispersion nach Ansprüchen 1 bis 4, dadurch gekennzeichnet, daß das Dispersionscopolymerisat funktionelle Reste aus der Reihe der Hydroxy-, Amido-, Aldehyd-, Carboxyl-, Amino-, Epoxy-, Thiol-, Cyano-, N-Methylol-, Isocyanato- und/oder blockierte Isocyanato-Gruppen als vernetzungsfähige Gruppen enthält.

6. Wäßrige Dispersion nach Ansprüchen 1 bis 5, dadurch gekennzeichnet, daß das Dispersionscopolymerisat funktionelle Reste aus der Reihe der Hydroxy-, Carboxyl-, Epoxy-Gruppen als vernetzungsfähige Gruppen enthält.

7. Wäßrige Dispersion nach Ansprüchen 1 bis 6, dadurch gekennzeichnet, daß sie ein wasserlösliches und/oder wasserdispergierbares Harz aus der Reihe Acrylatharze. Melamin-Formaldehydharze, Isocyanatharze enthält.

8. Verwendung der wäßrigen Dispersion nach Ansprüchen 1 bis 7 als Bestandteil von Einbrennlacken, Hydrofüllern, Metallic-Lacken und EPC-Lacken.

9. Verfahren zur Einbrennbeschichtung von Oberflächen fester Substrate unter Verwendung einer wäßrigen Dispersion nach Ansprüchen 1 bis 7, Auftragen der benötigten Dispersionsmenge auf die zu beschichtende Oberfläche, Trocknen und nachfolgendes Einbrennen der getrockneten Dispersionsschicht unter Vernetzung des Bindemittelcopolymerisats, dadurch gekennzeichnet, daß man die Trocknung der aufgetragenen Dispersionsmenge bei einer Temperatur unterhalb der Mindestfilmbildungstemperatur der Dispersion durchführt und danach die getrocknete Beschichtung bei einer Temperatur oberhalb der Glasübergangstemperatur einbrennt.

**Patentansprüche für folgende Vertragsstaaten : AT**

1. Verfahren zur Gewinnung einer wäßrigen Dispersion zur Herstellung von vernetzbaren Oberflächenbeschichtungen, enthaltend als Bindemittel ein vernetzbares Dispersionscopolymerisat aus olefinisch ungesättigten Monomeren sowie gegebenenfalls weitere Bestandteile aus der Gruppe Pigmente, Farbstoffe, Füllstoffe, wasserlösliche und/oder wasserdispergierbare Harze, Fremdvernetzer, Vernetzungskatalysatoren, Verdickungsmittel, Thixotropierungsmittel, Netzmittel, Korrosionsschutzmittel, Frostschutzmittel, Lichtstabilisatoren, Antioxidantien und Entschäumer, wobei die dispergierten Copolymerisatteilchen durchschnittliche Partikeldurchmesser von 0,5 bis 10 µm aufweisen, unter Vermischung der Komponenten, dadurch gekennzeichnet, daß der Anteil an vernetzungsfähige Gruppen tragenden Comonomereinheiten in dem Dispersionscopolymerisat, das dürch Emülsions- oder Suspensionscopolymerisation hergestellt würde, größer als 10 Gew.-% ist, bezogen auf das Dispersionscopolymerisat, die Mindestfilmbildungstemperatur der Dispersion im Temperaturbereich von 35 bis 120°C liegt und die Glasübergangstemperatur des Copolymerisats nicht interhalb von 49,5°C liegt.

2. Verfahren nach Anspruch 1, dadurch gekennzeichnet, daß das Dispersionscopolymerisat unter Zusatz von Radikalkettenüberträgersubstanzen hergestellt wurde.

3. Verfahren nach Anspruch 2, dadurch gekennzeichnet, daß Mercaptogruppen enthaltende Verbindungen als Radikalkettenüberträger verwendet wurden.

4. Verfahren nach Ansprüchen 1 bis 3, dadurch gekennzeichnet, daß das Dispersionscopolymerisat zu 11 bis 25 Gew.-%, bezogen auf das Dispersionscopolymerisat, aus vernetzungsfähige Gruppen tragenden Comonomereinheiten besteht.

5. Verfahren nach Ansprüchen 1 bis 4, dadurch gekennzeichnet, daß das Dispersionscopolymerisat funktionelle Reste aus der Reihe der Hydroxy-, Amido-, Aldehyd-, Carboxyl-, Amino-, Epoxy-, Thiol-, Cyano-, N-Methylol-, Isocyanato- und/oder blockierte Isocyanato-Gruppen als vernetzungsfähige Gruppen enthält.

6. Verfahren nach Ansprüchen 1 bis 5, dadurch gekennzeichnet, daß das Dispersionscopolymerisat funktionelle Reste aus der Reihe der Hydroxy-, Carboxyl-, Epoxy-Gruppen als vernetzungsfähige Gruppen enthält.

7. Verfahren nach Ansprüchen 1 bis 6, dadurch gekennzeichnet, daß ein wasserlösliches und/oder wasserdispergierbares Harz aus der Reihe Acrylatharze, Melamin-Formaldehydharze, Isocyanatharze eingesetzt wird.

8. Verwendung der wäßrigen Dispersion, hergestellt nach Ansprüchen 1 bis 7, als Bestandteil von Einbrennlacken, Hydrofüllern, Metallic-Lacken und EPC-Lacken.

9. Verfahren zur Einbrennbeschichtung von Oberflächen fester Substrate unter Verwendung einer wäßrigen Dispersion, hergestellt nach Ansprüchen 1 bis 7, Auftragen der benötigten Dispersionsmenge auf die zu beschichtende Oberfläche, Trocknen und nachfolgendes Einbrennen der getrockneten Dispersionsschicht unter Vernetzung des Bindemittelcopolymerisats, dadurch gekennzeichnet, daß man die Trocknung der aufgetragenen Dispersionsmenge bei einer Temperatur unterhalb der Mindestfilmbildungstemperatur der Dispersion durchführt und danach die getrocknete Beschichtung bei einer Temperatur oberhalb der Glasübergangstemperatur einbrennt.

**Claims**
**Claims for the following Contracting States : BE, DE, FR, GB, IT, NL, SE**

1. An aqueous dispersion for the production of crosslinkable surface coatings, containing, as the binder, a crosslinkable dispersion copolymer obtained from olefinically unsaturated monomers and, if appropriate, further components from the group comprising pigments, dyestuffs, extenders, water-soluble and/or water-dispersible resins, extraneous crosslinking agents, crosslinking catalysts, thickeners, thixotropic agents, wetting agents, anti-corrosion agents, antifreeze agents, light stabilizers, antioxidants and anti-foaming agents, the dispersed copolymer particles having average particle diameters from 0.5 to 10 $\mu$m, wherein the proportion of comonomer units carrying crosslinkable groups in the dispersion copolymer, prepared by emulsion copolymerisation or suspension copolymerisation, is greater than 10 % by weight, relative to the dispersion copolymer, the minimum film forming temperature of the dispersion is in the temperature range of 35 to 120 °C, and the glass transition temperature of the copolymer is not less than 49.5 °C.

2. An aqueous dispersion as claimed in claim 1, wherein the dispersion copolymer has been prepared with the addition of free-radical chain transfer substances.

3. An aqueous dispersion as claimed in claim 2, wherein compounds containing mercapto groups have been used as free-radical chain transfer agents.

4. An aqueous dispersion as claimed in any of claims 1 to 3, wherein the dispersion copolymer is composed of 11 to 25 % by weight, relative to the dispersion copolymer, of comonomer units containing crosslinkable groups.

5. An aqueous dispersion as claimed in any of claims 1 to 4, wherein the dispersion copolymer contains, as crosslinkable groups, functional radicals belonging to the series of hydroxyl, amido, aldehyde, carboxyl, amino, epoxy, thiol, cyano, N-methylol, isocyanato and/or masked isocyanato groups.

6. An aqueous dispersion as claimed in any of claims 1 to 5, wherein the dispersion copolymer contains, as crosslinkable groups, functional radicals belonging to the series of hydroxyl, carboxyl and epoxy groups.

7. An aqueous dispersion as claimed in any of claims 1 to 6, which contains a water-soluble and/or water-dispersible resin belonging to the series of acrylic resins, melamine-formaldehyde resins and isocyanate resins.

8. The use of the aqueous dispersion as claimed in any of claims 1 to 7 as a constituent of baking lacquers, hydrofillers, metallic paints and EPC paints.

9. A process for the bake-coating of surfaces of solid substrates using an aqueous dispersion as claimed in any of claims 1 to 7, applying the required amount of dispersion to the surface to be coated, drying and subsequently baking the dried dispersion layer with crosslinking of the binder copolymer, wherein drying of the amount of dispersion applied is carried out at a temperature below the minimum film-forming temperature of the dispersion and the dried coating is then baked at a temperature above the glass transition temperature.

**Claims for the following Contracting State : AT**

1. A process for obtaining an aqueous dispersion for the production of crosslinkable surface coatings, containing, as the binder, a crosslinkable dispersion copolymer obtained from olefinically unsaturated monomers and, if appropriate, further components from the group comprising pigments, dyestuffs, extenders, water-soluble and/or water-dispersible resins, extraneous crosslinking agents, crosslinking catalysts, thickeners, thixotropic agents, light wetting agents, anti-corrosion agents, antifreeze agents, stabilizers, anti-oxidants and anti-foaming agents, the dispersed copolymer particles having average particle diameters from 0.5 to 10 $\mu$m, by mixing the components, wherein the proportion of comonomer units carrying crosslinkable groups in the dispersion copolymer, prepared by emulsion copolymerisation or suspension copolymerisation, is greater than 10 % by weight, relative to the dispersion copolymer, the minimum film forming temperature of the dispersion is in the temperature range of 35 to 120 ° C, and the glass transition temperature of the copolymer is not less than 49.5 ° C.

2. A process as claimed in claim 1, wherein the dispersion copolymer has been prepared with the addition of free-radical chain transfer substances.

3. A process as claimed in claim 2, wherein compounds containing mercapto groups have been used as free-radical chain transfer agents.

4. A process as claimed in any of claims 1 to 3, wherein the dispersion copolymer is composed of 11 to 25 % by weight, relative to the dispersion copolymer, of comonomer units containing crosslinkable groups.

5. A process as claimed in any of claims 1 to 4, wherein the dispersion copolymer contains, as crosslinkable groups, functional radicals belonging to the series of hydroxyl, amido, aldehyde, carboxyl, amino, epoxy, thiol, cyano, N-methylol, isocyanato and/or masked isocyanato groups.

6. A process as claimed in any of claims 1 to 5, wherein the dispersion copolymer contains, as crosslinkable groups, functional radicals belonging to the series of hydroxyl, carboxyl and epoxy groups.

**7.** A process as claimed in any of claims 1 to 6, which contains a water-soluble and/or water-dispersible resin belonging to the series of acrylic resins, melamine-formaldehyde resins and isocyanate resins.

**8.** The use of the aqueous dispersion prepared as claimed in any of claims 1 to 7 as a constituent of baking lacquers, hydrofillers, metallic paints and EPC paints.

**9.** A process for the bake-coating of surfaces of solid substrates using an aqueous dispersion prepared as claimed in any of claims 1 to 7, applying the required amount of dispersion to the surface to be coated, drying and subsequently baking the dried dispersion layer with crosslinking of the binder copolymer, wherein drying of the amount of dispersion applied is carried out at a temperature below the minimum film-forming temperature of the dispersion and the dried coating is then baked at a temperature above the glass transition temperature.

**Revendications**

**Revendications pour les Etats contractants suivants : BE, DE, FR, GB, IT, NL, SE**

**1.** Dispersion aqueuse, destinée à réaliser des revêtements superficiels réticulables, contenant en tant que liant un copolymère réticulable en dispersion, constitué de monomères à insaturation oléfinique, et éventuellement d'autres constituants du groupe comprenant les pigments, les colorants, les charges, les résines solubles dans l'eau et/ou dispersibles dans l'eau, les agents de réticulation extérieurs, les catalyseurs de réticulation, les épaississants, les agents de thixotropisation, les mouillants, les agents anticorrosion, les antigels, les agents de stabilisation à la lumière, les antioxydants et les antimoussants, les particules dispersées du copolymère ayant un diamètre moyen de particule de 0,5 à 10 $\mu$m, caractérisée en ce que la teneur du copolymère en dispersion en motifs comonomères portant des groupes réticulables, copolymère qui a été préparé par copolymérisation en émulsion ou en dispersion, est supérieure à 10 % en poids par rapport au copolymère en dispersion, que la température minimale de formation du feuil de la dispersion est comprise dans l'intervalle de 35 à 120°C, et que la température de transition vitreuse du copolymère n'est pas inférieure à 49,5°C.

**2.** Dispersion aqueuse selon la revendication 1, caractérisée en ce que le copolymère en dispersion a été préparé par addition d'agents de transfert de chaîne.

**3.** Dispersion aqueuse selon la revendication 2, caractérisée en ce qu'on utilise en tant qu'agents de transfert de chaîne des composés contenant des groupes mercapto.

**4.** Dispersion aqueuse selon les revendications 1 à 3, caractérisée en ce que le copolymère en dispersion est pour 11 à 25 % en poids par rapport au copolymère en dispersion constitué de motifs comonomères portant des groupes réticulables.

**5.** Dispersion aqueuse selon les revendications 1 à 4, caractérisée en ce que le copolymère en dispersion contient des résidus fonctionnels appartenant à l'ensemble comprenant les radicaux hydroxy, amido, aldéhyde, carboxyle, amino, époxy, thiol, cyano, N-méthylol, isocyanato et/ou isocyanato bloqué, en tant que groupes réticulables.

**6.** Dispersion aqueuse selon les revendications 1 à 5, caractérisée en ce que le copolymère en dispersion contient en tant que groupes réticulables des résidus fonctionnels du groupe comprenant les radicaux hydroxy, carboxyle et époxy.

**7.** Dispersion aqueuse selon les revendications 1 à 6, caractérisée en ce qu'elle contient une résine soluble et/ou dispersible dans l'eau appartenant à l'ensemble comprenant les résines acrylates, les résines de mélamine/formaldéhyde et les résines isocyanates.

**8.** Utilisation de la dispersion aqueuse selon les revendications 1 à 7, comme constituants de vernis au four, d'hydrocharges, de vernis métallisés et de peintures en poudre électrostatique EPC.

**9.** Procédé de revêtement au four de la surface de subjectiles solides par utilisation d'une dispersion aqueuse selon les revendications 1 à 7, application de la quantité nécessaire de la dispersion sur la surface à revêtir, séchage puis cuisson de la couche de dispersion séchée, avec utilisation du copolymère liant, caractérisé en ce qu'on met en oeuvre le séchage de la quantité appliquée de la dispersion à une température inférieure à la température minimale de formation du feuil de la dispersion, le revêtement séché étant ensuite cuit à une température supérieure à la température de transition vitreuse.

**Revendictions pour l'Etat contractant suivant : AT**

1. Procédé pour préparer une dispersion aqueuse, destiné à réaliser des revêtements superficiels réticulables, contenant en tant que liant un copolymère réticulable en dispersion, constitué de monomères à insaturation oléfinique, et éventuellement d'autres constituants du groupe comprenant les pigments, les colorants, les charges, les résines solubles dans l'eau et/ou dispersibles dans l'eau, les agents de réticulation extérieurs, les catalyseurs de réticulation, les épaississants, les agents de thixotropisation, les mouillants, les agents anticorrosion, les antigels, les agents de stabilisation à la lumière, les antioxydants et les antimoussants, les particules dispersées du copolymère ayant un diamètre moyen de particule de 0,5 à 10 $\mu$m, caractérisé en ce que la teneur du copolymère en dispersion en motifs comonomères portant des groupes réticulables, copolymère qui a été préparé par copolymérisation en émulsion ou en dispersion, est supérieure à 10 % en poids par rapport au copolymère en dispersion, que la température minimale de formation du feuil de la dispersion est comprise dans l'intervalle de 35 à 120°C, et que la température de transition vitreuse du copolymère n'est pas inférieure à 49,5°C.

2. Procédé selon la revendication 1, caractérisé en ce que le copolymère en dispersion a été préparé par addition d'agents de transfert de chaîne.

3. Procédé selon la revendication 2, caractérisé en ce qu'on utilise en tant qu'agents de transfert de chaîne des composés contenant des groupes mercapto.

4. Procédé selon les revendications 1 à 3, caractérisé en ce que le copolymère en dispersion est pour 11 à 25 % en poids par rapport au copolymère en dispersion constitué de motifs comonomères portant des groupes réticulables.

5. Procédé selon les revendications 1 à 4, caractérisé en ce que le copolymère en dispersion contient des résidus fonctionnels appartenant à l'ensemble comprenant les radicaux hydroxy, amido, aldéhyde, carboxyle, amino, époxy, thiol, cyano, N-méthylol, isocyanato et/ou isocyanato bloqué, en tant que groupes réticulables.

6. Procédé selon les revendications 1 à 5, caractérisé en ce que le copolymère en dispersion contient en tant que groupes réticulables des résidus fonctionnels du groupe comprenant les radicaux hydroxy, carboxyle et époxy.

7. Procédé selon les revendications 1 à 6, caractérisé en ce qu'elle contient une résine soluble et/ou dispersible dans l'eau appartenant à l'ensemble comprenant les résines acrylates, les résines de mélamine/formaldéhyde et les résines isocyanates.

8. Utilisation de la dispersion aqueuse selon les revendications 1 à 7, comme constituants de vernis au four, d'hydrocharges, de vernis métallisés et de peintures en poudre électrostatique EPC.

9. Procédé de revêtement au four de la surface de subjectiles solides par utilisation d'une dispersion aqueuse selon les revendications 1 à 7, application de la quantité nécessaire de la dispersion sur la surface à revêtir, séchage puis cuisson de la couche de dispersion séchée, avec utilisation du copolymère liant, caractérisé en ce qu'on met en oeuvre le séchage de la quantité appliquée de la dispersion à une température inférieure à la température minimale de formation du feuil de la dispersion, le revêtement séché étant ensuite cuit à une température supérieure à la température de transition vitreuse.